# EUROPEAN PATENT APPLICATION

(11) **EP 4 637 198 A1**
(43) Date of publication of application: **22.10.2025**
(21) Application number: 24759489.8
(22) Date of filing: 29.01.2024
(51) Int. Cl.: H04W 16/06, H04B 7/14

(54) **TRANSMISSION SYSTEM, REMOTE RADIO UNIT (RRU), AND NETWORK DEVICE**

(30) Priority: 21.02.2023 CN 202310183553
(71) Applicant: Huawei Technologies Co., Ltd., Shenzhen, Guangdong 518129 (CN)
(72) Inventor: LIN, Huajiong, Shenzhen, Guangdong 518129 (CN); CHEN, Weimin, Shenzhen, Guangdong 518129 (CN); YU, Jianjun, Shanghai 200433 (CN); DING, Junjie, Shanghai 200433 (CN)
(74) Representative: MERH-IP Matias Erny Reichl Hoffmann Patentanwälte PartG mbB
(86) International application number: PCT/CN2024/074426
(87) International publication number: WO 2024/174812

(57) **Abstract**

This application provides a transmission system, a remote radio unit (remote radio unit, RRU), and a network device, to simplify installation of the network device supporting a microwave (microwave, MW) technology and a free space optical (free space optical, FSO) communication technology. In this solution, the RRU can implement joint deployment of the MW technology and the FSO technology. One BBU and one RRU that integrates the MW technology and the FSO technology can be deployed in one network device. Based on this, the BBU and the RRU in the network device may be connected through one cable. This solution can simplify installation of the network device.

## Description

### CROSS-REFERENCE TO RELATED APPLICATIONS

This application claims priority to Chinese Patent Application No. 202310183553.4, filed with the China National Intellectual Property Administration on February 21, 2023 and entitled "TRANSMISSION SYSTEM, REMOTE RADIO UNIT RRU, AND NETWORK DEVICE", which is incorporated herein by reference in its entirety.

### TECHNICAL FIELD

This application relates to the field of communication technologies, and in particular, to a transmission system, a remote radio unit RRU, and a network device.

### BACKGROUND

In a communication system in which a plurality of network devices are deployed, the network devices are typically connected through cables to enable point-to-point communication. However, such a network deployment manner not only increases network deployment costs, but also limits deployment positions of the network devices.

Microwave (microwave, MW) and light exhibit different propagation characteristics in the air. For example, fog attenuates light transmission significantly more than MW, while rainwater attenuates MW transmission at frequencies higher than 40 GHz much more than light. Therefore, to enhance deployment flexibility of the network devices and reduce the network deployment costs, the communication system utilizes an MW technology and a free space optical (free space optical, FSO) communication technology to set up a wireless communication link between the network devices.

In the communication system, the network device typically adopts a separate remote architecture, including a baseband unit (baseband unit, BBU) and a remote radio unit (remote radio unit, RRU). The RRU includes an MW RRU supporting the MW technology and an FSO RRU supporting the FSO technology. The BBU needs to be separately connected to the MW RRU and the FSO RRU through cables (optical fibers or electrical cables).

Since the two types of RRUs in the network device that uses the foregoing architecture need to be separately deployed, and each requires a dedicated cable connection to the BBU, installation of the network device becomes more complex.

### SUMMARY

This application provides a transmission system, an RRU, and a network device, to simplify installation of the network device supporting an MW technology and an FSO technology.

According to a first aspect, an embodiment of this application provides a transmission system. The transmission system may be used in a first network device. The transmission system includes: a baseband unit BBU and a remote radio unit RRU, where the RRU includes a first transmission module, a free space communication FSO radio frequency RF module, a microwave MW RF module, and an antenna module, the BBU is connected to the first transmission module in the RRU through a cable, the first transmission module is connected to the FSO RF module and the MW RF module, and the FSO RF module and the MW RF module are separately connected to the antenna module. Based on the foregoing structure, in a data sending process of the first network device, a function of each component is as follows:
The BBU is configured to: generate a first baseband signal based on first data, and transmit the first baseband signal to the first transmission module in the RRU through the cable;
the first transmission module is configured to transmit the received first baseband signal to the FSO RF module and/or the MW RF module;
the FSO RF module is configured to: when receiving the first baseband signal, process the first baseband signal to obtain a first FSO signal; and transmit the first FSO signal to the antenna module;
the MW RF module is configured to: when receiving the first baseband signal, process the first baseband signal to obtain a first MW signal; and transmit the first MW signal to the antenna module; and
the antenna module is configured to: transmit the received first FSO signal, and/or transmit the received first MW signal.

According to this solution, the first network device may implement the data sending process by using an MW technology and/or an FSO technology. In this solution, the RRU may implement joint deployment of the MW technology and the FSO technology. In this way, one BBU and one RRU that integrates the MW technology and the FSO technology may be deployed in one network device. Based on this, the BBU and the RRU in the network device may be connected through one cable. This solution can reduce installation difficulty of the network device.

In a possible design, in the data sending process of the first network device, a function of each component is as follows:
The antenna module is further configured to: receive a second FSO signal from a second network device, and transmit the second FSO signal to the FSO RF module; and receive a second MW signal from the second network device, and transmit the second MW signal to the MW RF module;
the FSO RF module is further configured to: process the received second FSO signal to obtain a second baseband signal, and transmit the second baseband signal to the first transmission module;
the MW RF module is further configured to: process the received second MW signal to obtain a third baseband signal, and transmit the third baseband signal to the first transmission module;
the first transmission module is further configured to transmit a target baseband signal in the received second baseband signal and the received third baseband signal to the BBU through the cable, where the target baseband signal is the second baseband signal or the third baseband signal; and
the BBU is further configured to process the received target baseband signal to obtain second data.

According to this solution, the first network device may implement a data receiving process by using the MW technology or the FSO technology.

In a possible design, the first transmission module includes a sending unit, an FSO sending link, an MW sending link, a first selection unit, an FSO receiving link, and an MW receiving link. A function of each component is as follows:
The sending unit is configured to transmit the received first baseband signal to the FSO sending link and/or the MW sending link;
the FSO sending link is configured to transmit the first baseband signal to the FSO RF module when receiving the first baseband signal;
the MW sending link is configured to transmit the first baseband signal to the MW RF module when receiving the first baseband signal;
the FSO receiving link is configured to: receive the second baseband signal, and transmit the second baseband signal to the first selection unit;
the MW receiving link is configured to: receive the third baseband signal, and transmit the third baseband signal to the first selection unit; and
the first selection unit is configured to: select a target receiving link from the FSO receiving link and the MW receiving link; receive the target baseband signal from the target receiving link; and transmit the target baseband signal to the BBU through the cable, where the target receiving link is the FSO receiving link or the MW receiving link.

In this design, the first transmission module may transmit the received first baseband signal to the FSO RF module and/or the MW RF module. In addition, to avoid repeated data receiving or avoid data receiving interference, the first transmission module selects a baseband signal from one of the FSO receiving link and the MW receiving link to transmit the baseband signal to the BBU. According to this design, in data receiving and sending processes of the first network device, the first transmission module may implement bidirectional transmission of the baseband signal.

In a possible design, the first transmission module further includes a control module; and the control module is connected to the first selection unit; the control module is configured to send a first control command to the first selection unit, where the first control command instructs the first selection unit to select the target receiving link; and the first selection unit is configured to select the target receiving link from the FSO receiving link and the MW receiving link according to the first control command.

According to this design, the first transmission module may select, via the control module, a baseband signal from one of the FSO receiving link and the MW receiving link to transmit the baseband signal to the BBU.

In a possible design, the control module is connected to the FSO RF module and the MW RF module; and the control module is further configured to: perform detection on signal received power of the FSO RF module; perform detection on signal received power of the MW RF module; and generate the first control command based on the signal received power of the FSO RF module and the signal received power of the MW RF module.

According to this design, the control module may adaptively determine, based on the signal received power of the FSO RF module and the signal received power of the MW RF module, to select a baseband signal from a specific receiving link.

In a possible design, when the signal received power of the FSO RF module is greater than or equal to the signal received power of the MW RF module, the first control command indicates that the target receiving link selected by the first selection unit is the FSO receiving link; or when the signal received power of the FSO RF module is less than the signal received power of the MW RF module, the first control command indicates that the target receiving link selected by the first selection unit is the MW receiving link.

According to this design, it can be ensured that the first selection unit can select a baseband signal with better signal quality.

In a possible design, the control module is connected to the MW sending link;
the BBU is further configured to modulate the first baseband signal and a control signal before transmitting the first baseband signal to the first transmission module in the RRU through the cable, where the control signal indicates to select an FSO technology or an MW technology for communication;
the MW sending link is further configured to: before transmitting the first baseband signal to the MW RF module, demodulate the first baseband signal to obtain the control signal; and transmit the control signal to the control module; and
the control module is further configured to generate the first control command based on the control signal.

According to this design, the control module may determine, based on the control signal of the BBU, to select a baseband signal from a specific receiving link. Because the BBU is connected to the first transmission module through the cable, the BBU may transmit the control signal through a link for transmission of the baseband signal.

In a possible design, the sending unit includes a splitting unit; and the splitting unit is configured to: split the received first baseband signal, transmit one channel of the first baseband signal to the FSO sending link, and transmit the other channel of the first baseband signal to the MW sending link.

According to this design, the first transmission module may transmit the received first baseband signal to both the FSO sending link and the MW sending link.

In a possible design, the sending unit includes a second selection unit; and the second selection unit is configured to: select a target sending link from the FSO sending link and the MW sending link, and transmit the received first baseband signal to the target sending link, where the target sending link is the FSO sending link or the MW sending link.

The first transmission module may send the received first baseband signal to one of the FSO sending link and the MW sending link.

In a possible design, the control module is further configured to send a second control command to the second selection unit, where the second control command instructs the second selection unit to select the target sending link; and when the first control command indicates that the target receiving link selected by the first selection unit is the FSO receiving link, the second control command indicates that the target sending link selected by the second selection unit is the FSO sending link; or when the first control command indicates that the target receiving link selected by the first selection unit is the MW receiving link, the second control command indicates that the target sending link selected by the second selection unit is the MW sending link.

In a possible design, the control module may generate the first control command and the second control command in a same manner.

According to a second aspect, this application further provides an RRU. The RRU may be used in a first network device. The first network device further includes a BBU. For a function and a structure of the RRU, refer to a function and a structure of the RRU in the first aspect. Details are not described herein again.

According to a third aspect, this application provides a network device. The network device includes: a BBU and the RRU according to the second aspect. For functions and structures of the BBU and the RRU, refer to descriptions of functions and structures of the BBU and the RRU in the first aspect. Details are not described herein again.

According to a fourth aspect, this application further provides a chip. The chip may be used in a BBU or an RRU. For a structure of the chip, refer to descriptions of the BBU or the RRU in the first aspect. Details are not described herein again.

According to a fifth aspect, this application further provides a circuit board. The circuit board may be used in a BBU or an RRU. For a structure of the circuit board, refer to descriptions of the BBU or the RRU in the first aspect. Details are not described herein again.

According to a sixth aspect, this application further provides a data transmission method. The method may be applied to a first network device having the transmission system according to the first aspect. A BBU and an RRU that are in the first network device are connected through one cable. In the method, the first network device may implement a data sending process through the following steps.

The BBU generates a first baseband signal based on first data, and transmits the first baseband signal to a first transmission module in the RRU through the cable. The first transmission module transmits the received first baseband signal to an FSO RF module and/or an MW RF module. When receiving the first baseband signal, the FSO RF module processes the first baseband signal to obtain a first FSO signal; and transmits the first FSO signal to an antenna module. When receiving the first baseband signal, the MW RF module processes the first baseband signal to obtain a first MW signal; and transmits the first MW signal to the antenna module. The antenna module transmits the received first FSO signal, and/or transmits the received first MW signal.

In the method, the first network device may implement a data sending process through the following steps.

The antenna module receives a second FSO signal from a second network device, and transmits the second FSO signal to the FSO RF module; and receives a second MW signal from the second network device, and transmits the second MW signal to the MW RF module; the FSO RF module processes the received second FSO signal to obtain a second baseband signal, and transmits the second baseband signal to the first transmission module; the MW RF module processes the received second MW signal to obtain a third baseband signal, and transmits the third baseband signal to the first transmission module; the first transmission module transmits a target baseband signal in the received second baseband signal and the received third baseband signal to the BBU through the cable, where the target baseband signal is the second baseband signal or the third baseband signal; and the BBU processes the received target baseband signal to obtain second data.

For technical effects that can be achieved in any one of the second aspect to the sixth aspect, refer to descriptions of technical effects that can be achieved in any one of the possible designs in the first aspect. Repeated descriptions are not provided.

### BRIEF DESCRIPTION OF DRAWINGS

FIG. 1 is a diagram of an architecture of a communication system according to an embodiment of this application;
FIG. 2A is a diagram of an architecture of a communication system according to an embodiment of this application;
FIG. 2B is a diagram of an architecture of a transmission system of a conventional network device;
FIG. 3 is a diagram of an architecture of a transmission system of a first network device according to an embodiment of this application;
FIG. 4 is a diagram of an architecture of a transmission system of a first network device according to an embodiment of this application;
FIG. 5A is a diagram of a data sending process of a first network device according to an embodiment of this application;
FIG. 5B is a diagram of a data receiving process of a first network device according to an embodiment of this application;
FIG. 6A is a diagram of an architecture of a transmission system of a first network device according to an embodiment of this application;
FIG. 6B is a diagram of an architecture of a transmission system of a first network device according to an embodiment of this application;
FIG. 6C is a diagram of an architecture of a transmission system of a first network device according to an embodiment of this application;
FIG. 6D is a diagram of an architecture of a transmission system of a first network device according to an embodiment of this application;
FIG. 6E is a diagram of an architecture of a transmission system of a first network device according to an embodiment of this application;
FIG. 6F is a diagram of an architecture of a transmission system of a first network device according to an embodiment of this application;
FIG. 6G is a diagram of an architecture of a transmission system of a first network device according to an embodiment of this application;
FIG. 7 is a diagram of an architecture of a transmission system of a first network device according to an embodiment of this application;
FIG. 8 is a diagram of an architecture of a transmission system of a network device according to an embodiment of this application;
FIG. 9A and FIG. 9B are a diagram of circuits of optical modules in a BBU and an RRU according to an embodiment of this application; and
FIG. 10A and FIG. 10B are another diagram of circuits of optical modules in a BBU and an RRU according to an embodiment of this application.

### DESCRIPTION OF EMBODIMENTS

This application provides a transmission system, an RRU, and a network device, to simplify installation of the network device supporting an MW technology and an FSO technology.

In solutions provided in this application, an RRU in the network device may support both the MW technology and the FSO technology, and a BBU may be connected to the RRU through one cable. According to this solution, the installation of the network device can be simplified on the basis of ensuring deployment of the network device in a separate remote architecture.

The following describes in detail the solutions provided in embodiments of this application with reference to accompanying drawings.

The solutions provided in embodiments of this application are applicable to a communication system including a plurality of network devices. Different from a radio access network (radio access network, RAN), the communication system to which embodiments of this application are applicable uses a fixed transmission communication manner. Each of the network devices in the communication system can establish a communication connection with another network device, to perform point-to-point communication.

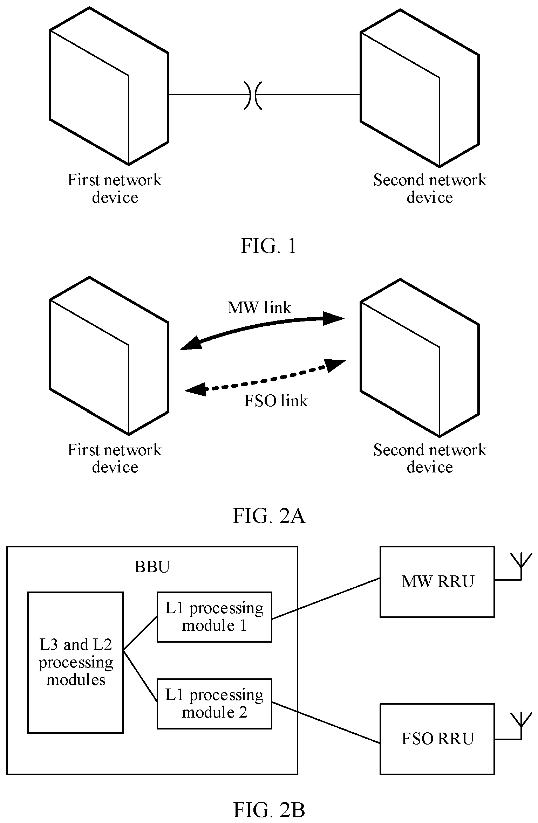

The communication system is applicable to various scenarios in which the network device needs to perform point-to-point communication. The following uses a first network device and a second network device as an example for description. A structure of the communication system is shown in FIG. 1.

A specific form of the network device in the communication system is not limited in this application. The following uses an example to describe a communication scenario to which the communication system is applicable and a representation form of the network device.

In an implementation, the communication system shown in FIG. 1 may be a mobile communication system. In this case, the first network device may be a base station, and the second network device may be a core network device or a mobile edge computing (mobile edge computing, MEC) server; or both the first network device and the second network device are base stations; or both the first network device and the second network device are core network devices; or the first network device is a core network device, and the second network device is a network element other than the core network device (for example, an application function (application function, AF) network element, a mobile edge computing (mobile edge computing, MEC) server, or a data server).

In another implementation, the communication system shown in FIG. 1 may be a distributed storage system. The first network device may be a computing node, and the second network device may be a storage node.

In another implementation, the communication system shown in FIG. 1 may be a data network (data network, DN). The first network device may be an application function (application function, AF) network element, and the second network device may be a server.

To reduce network deployment costs of the communication system and break a limitation caused by a deployment position of the network device, in the communication system shown in FIG. 1, a wireless communication link may be established between two network devices by using an MW technology and an FSO technology, to implement point-to-point communication between the two network devices. Refer to FIG. 2A.

A network device (for example, the first network device or the second network device in FIG. 1) that supports the MW technology and the FSO technology generally uses a separate remote architecture. To be specific, the network device includes a BBU and an RRU. The BBU and the RRU are connected through a cable (an electrical cable or an optical fiber).

The BBU is mainly responsible for processing of all protocol layers, that is, the BBU is to complete data processing of all user planes and control planes of a layer 1 (layer 1, L1), a layer 2 (layer 2, L2), and a layer 3 (layer 2, L3) in a wireless communication protocol, specifically including: baseband processing functions (including processing such as encoding, multiplexing, and modulation), interface functions, signaling processing functions, local and remote operation and maintenance functions, and the like.

The RRU is mainly responsible for signal modulation, signal demodulation, and radio frequency processing. An antenna module is built in or connected to the RRU, to transmit or receive a radio frequency signal (high-frequency signal).

Usually, the BBU is deployed indoors, and therefore the BBU may also be referred to as an indoor unit (indoor unit, IDU); and the RRU is generally deployed outdoors, and therefore the RRU may also be referred to as an outdoor unit (outdoor unit, ODU).

The following specifically describes functions of the BBU and the RRU with reference to data receiving and sending procedures.

In a data sending process, the BBU may perform baseband processing on to-be-transmitted data to generate a baseband signal, and transmit the baseband signal to the RRU through the cable; and the RRU performs signal modulation and radio frequency processing on the received baseband signal to obtain a radio frequency signal, and transmits the radio frequency signal through an antenna.

In a data receiving process, the RRU may receive a radio frequency signal through an antenna, and perform radio frequency processing and signal demodulation on the received radio frequency signal to obtain a baseband signal; the RRU transmits the obtained baseband signal to the BBU through the cable; and the BBU performs baseband processing on the received baseband signal, and performs subsequent processing.

The baseband signal may include in-phase and quadrature (in-phase and quadrature, IQ) signals. To be specific, the baseband signal includes: an in-phase (in-phase, I) signal and a quadrature (quadrature, Q) signal.

Optionally, in embodiments of this application, transmission of the baseband signal between the BBU and the RRU may be performed through a common public radio interface (common public radio interface, CPRI) or another communication interface. This is not limited in embodiments of this application.

In a separate remote architecture of a current network device, an RRU uses a separate deployment manner for an MW technology and an FSO technology. To be specific, the network device includes two RRUs: an MW RRU supporting the MW technology and an FSO RRU supporting the FSO technology. Refer to FIG. 2B. The MW RRU and the FSO RRU are jointly connected to one BBU. Therefore, the RRU is connected to the MW RRU and the FSO RRU through two cables respectively.

As shown in FIG. 2B, based on logical function division of the BBU, the BBU may include L3 and L2 processing modules and two L1 processing modules.

The L3 and L2 processing modules are configured to implement functions of the network device at an L3 and an L2. Each of the L1 processing modules is configured to implement functions of the network device at an L1.

An L1 processing module 1 is connected to the MW RRU, and an L2 processing module 2 is connected to the FSO RRU.

The L3 and L2 processing modules may send to-be-transmitted data to both the L1 processing module 1 and an L1 processing module 2, to implement data backup transmission. The L3 and L2 processing modules may further split the to-be-transmitted data, and send a part of the data to the L1 processing module 1 and the other part of the data to the L1 processing module 2.

It is clear that, the MW RRU and the FSO RRU need to be deployed at both a transmit end and a receive end of point-to-point transmission. Further, to ensure signal transmission quality, the MW RRU at the transmit end and the MW RRU at the receive end need to be installed in alignment, and the FSO RRU at the transmit end and the FSO RRU at the receive end also need to be installed in alignment. Therefore, the foregoing deployment manner increases installation difficulty of the network device. In addition, the two cables need to be deployed for each network device. This also increases costs of the network device.

To reduce installation difficulty of a network device, an embodiment of this application provides a transmission system. The transmission system is applicable to a network device in a communication system of point-to-point transmission. The following uses a first network device in a communication system shown in FIG. 2A as an example for description. For a transmission system of a second network device that performs point-to-point communication with the first network device, refer to a transmission system of the first network device. Details are not described again in this embodiment of this application.

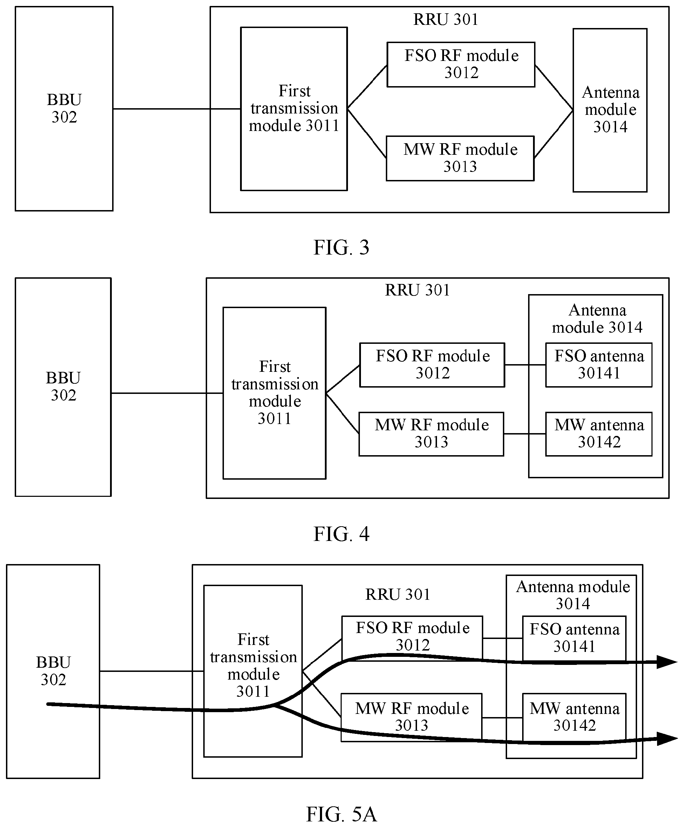

The first network device is deployed by using a separate remote architecture. Refer to FIG. 3. The transmission system of the first network device includes: a BBU 302 and an RRU 301. The RRU 301 includes a first transmission module 3011, an FSO RF module 3012, an MW RF module 3013, and an antenna module 3014. The BBU 302 is connected to the first transmission module 3011 in the RRU 301 through a cable, the first transmission module 3011 is connected to the FSO RF module 3012 and the MW RF module 3013, and the FSO RF module 3012 and the MW RF module 3013 are separately connected to the antenna module 3014.

The cable connecting the BBU 302 and the first transmission module 3011 may be an optical fiber or an electrical cable. This is not limited in this application. It should be noted that, the cable may implement signal receiving and sending. In this way, bidirectional transmission is implemented. In addition, transmission of a baseband signal between the BBU 302 and the first transmission module 3011 may be performed through a CPRI or another communication interface.

In an implementation, refer to FIG. 4. The antenna module 3014 includes: an FSO antenna 30141 and an MW antenna 30142. In related accompanying drawings that are subsequently described in this embodiment of this application, the antenna module 3014 shown in FIG. 4 is used as an example for description.

The FSO antenna 30141 is connected to the FSO RF module 3012, and is configured to transmit or receive an FSO signal. Specifically, the FSO antenna 30141 may transmit an FSO signal received from the FSO RF module 3012, and transmit an FSO signal received from the second network device to the FSO RF module 3012. The FSO antenna 30141 may also be referred to as an optical antenna.

The MW antenna 30142 is connected to the MW RF module 3013, and is configured to transmit or receive an MW signal. Specifically, the MW antenna 30142 may transmit an MW signal received from the MW RF module 3013, and transmit an MW signal received from the second network device to the MW RF module 3013.

The following specifically describes a function of each component with reference to a data sending process of the first network device shown in FIG. 5A.

The BBU 302 is configured to: generate a first baseband signal based on to-be-transmitted first data, and transmit the first baseband signal to the first transmission module 3011 in the RRU 301 through the cable. Optionally, the BBU 302 may perform baseband processing on to-be-transmitted first data to generate the first baseband signal.

The first transmission module 3011 is configured to transmit the received first baseband signal to the FSO RF module 3012 and/or the MW RF module 3013.

The FSO RF module 3012 is configured to: when receiving the first baseband signal, process the first baseband signal to obtain a first FSO signal; and transmit the first FSO signal to the antenna module 3014. Optionally, the FSO RF module 3012 may perform radio frequency processing on the first baseband signal based on an FSO technology to obtain the first FSO signal.

The MW RF module 3013 is configured to: when receiving the first baseband signal, process the first baseband signal to obtain a first MW signal; and transmit the first MW signal to the antenna module 3014. Optionally, the MW RF module 3013 may perform radio frequency processing on the first baseband signal based on an MW technology to obtain the first MW signal.

The antenna module 3014 is configured to: transmit the received first FSO signal, and/or transmit the received first MW signal. For example, the FSO antenna 30141 in the antenna module 3014 transmits the first FSO signal; and the MW antenna 30142 in the antenna module 3014 transmits the first MW signal.

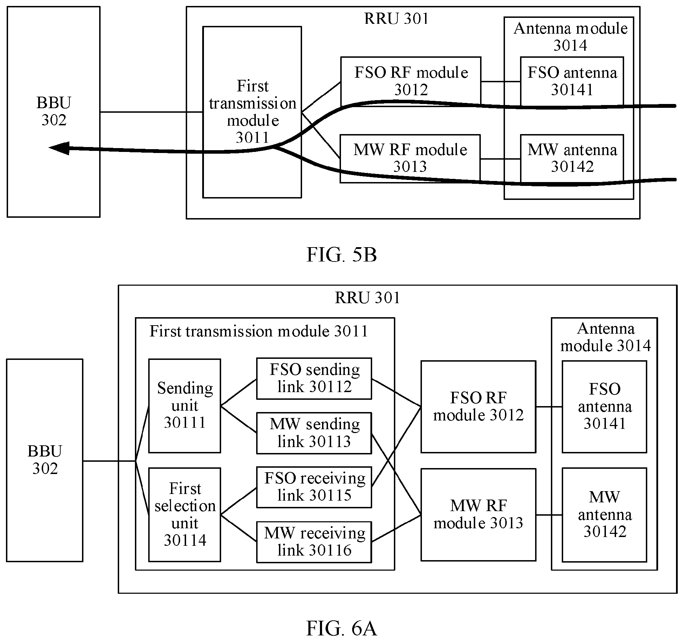

The following specifically describes a function of each component with reference to a data receiving process of the first network device shown in FIG. 5B.

The antenna module 3014 is further configured to: receive a second FSO signal from the second network device, and transmit the second FSO signal to the FSO RF module 3012; and receive a second MW signal from the second network device, and transmit the second MW signal to the MW RF module 3013. For example, the FSO antenna 30141 in the antenna module 3014 may receive the second FSO signal, and transmit the second FSO signal to the FSO RF module 3012; and the MW antenna 30142 in the antenna module 3014 may receive the second MW signal, and transmit the second MW signal to the MW RF module 3013.

The FSO RF module 3012 is further configured to: process the received second FSO signal to obtain a second baseband signal, and transmit the second baseband signal to the first transmission module 3011. Optionally, the FSO RF module 3012 may perform radio frequency processing on the second FSO signal based on the FSO technology to obtain the second baseband signal.

The MW RF module 3013 is further configured to: process the received second MW signal to obtain a third baseband signal, and transmit the third baseband signal to the first transmission module 3011. Optionally, the MW RF module 3013 may perform radio frequency processing on the second MW signal based on the MW technology to obtain the third baseband signal.

The first transmission module 3011 is further configured to transmit a target baseband signal in the received second baseband signal and the received third baseband signal to the BBU 302 through the cable, where the target baseband signal is the second baseband signal or the third baseband signal.

The BBU 302 is further configured to process the received target baseband signal to obtain second data. Optionally, the BBU 302 may perform baseband processing on the target baseband signal to obtain the second data.

It should be noted that, the second baseband signal and the third baseband signal may carry same data or different data. This is not limited in this application. To be specific, the second network device may simultaneously send the same data by using the FSO technology and the MW technology; or send the to-be-transmitted data by using different technologies in a split manner.

Based on functions of the first transmission module 3011 in data receiving and sending processes of the first network device shown in FIG. 5A and FIG. 5B, this application further provides a structure of the first transmission module 3011. Refer to FIG. 6A. In an implementation, the first transmission module 3011 includes a sending unit 30111, an FSO sending link 30112, an MW sending link 30113, a first selection unit 30114, an FSO receiving link 30115, and an MW receiving link 30116.

The sending unit 30111 is configured to transmit the first baseband signal received from the BBU 302 to the FSO sending link 30112 and/or the MW sending link 30113.

The FSO sending link 30112 is configured to transmit the first baseband signal to the FSO RF module 3012 when receiving the first baseband signal. Optionally, when sending the first baseband signal, the FSO sending link 30112 may process the first baseband signal. For example, when the BBU 302 modulates the first baseband signal, the FSO sending link 30112 may demodulate the first baseband signal.

The MW sending link 30113 is configured to transmit the first baseband signal to the MW RF module 3013 when receiving the first baseband signal. When sending the first baseband signal, the MW sending link 30113 may process the first baseband signal. This is not limited in this application.

The FSO receiving link 30115 is configured to: receive the second baseband signal from the FSO RF module 3012, and transmit the second baseband signal to the first selection unit 30114.

The MW receiving link 30116 is configured to: receive the third baseband signal from the MW RF module 3013, and transmit the third baseband signal to the first selection unit 30114.

The first selection unit 30114 is configured to: select a target receiving link from the FSO receiving link 30115 and the MW receiving link 30116; receive the target baseband signal from the target receiving link; and transmit the target baseband signal to the BBU 302 through the cable, where the target receiving link is the FSO receiving link 30115 or the MW receiving link 30116.

Based on the structure of the first transmission module 3011 shown in FIG. 6A, the first transmission module 3011 may transmit the received first baseband signal to the FSO RF module 3012 and/or the MW RF module 3013, and to avoid repeated data receiving or avoid data receiving interference, the first transmission module 3011 selects a baseband signal from one of the FSO receiving link 30115 and the MW receiving link 30116, and transmits the baseband signal to the BBU 302.

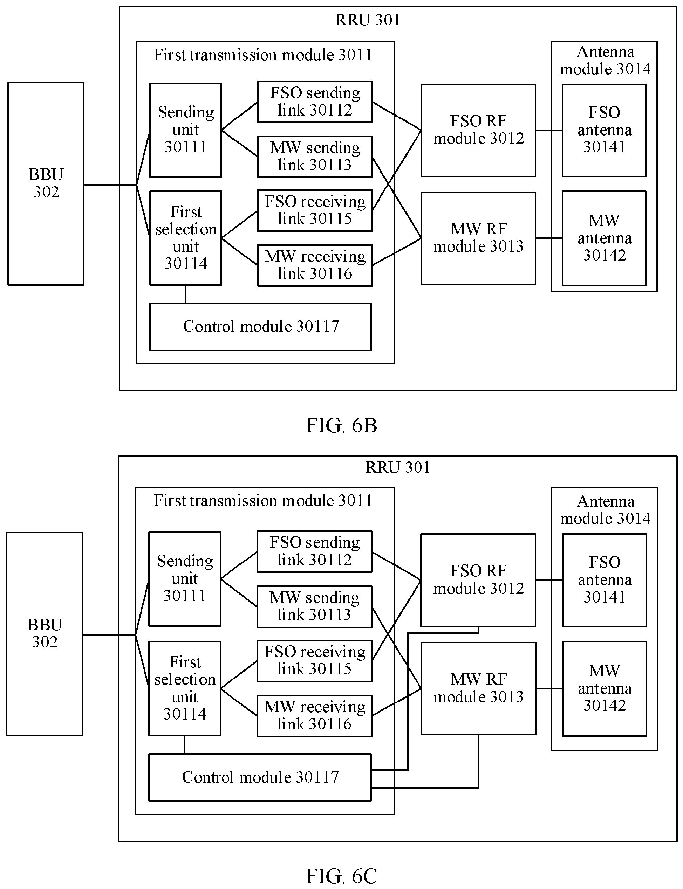

Optionally, based on the structure of the first transmission module 3011 shown in FIG. 6A, the first transmission module 3011 may further include: a control module 30117. Refer to FIG. 6B. The control module 30117 is connected to the first selection unit 30114.

The control module 30117 is configured to send a first control command to the first selection unit 30114, where the first control command instructs the first selection unit 30114 to select the target receiving link.

The first selection unit 30114 is further configured to select the target receiving link from the FSO receiving link 30115 and the MW receiving link 30116 according to the first control command.

In this embodiment of this application, the control module 30117 may control the first selection unit 30114 in, but not limited to, the following two manners.

Manner 1: Refer to FIG. 6C. The control module 30117 is connected to the FSO RF module 3012 and the MW RF module 3013. The control module 30117 may adaptively determine, based on signal received power of the FSO RF module 3012 and signal received power of the MW RF module 3013, to select a baseband signal from a specific receiving link.

In Manner 1, the control module 30117 is further configured to: perform detection on the signal received power of the FSO RF module 3012; perform detection on the signal received power of the MW RF module 3013; and generate the first control command based on the signal received power of the FSO RF module 3012 and the signal received power of the MW RF module 3013.

Optionally, to ensure that the first selection unit 30114 can select a baseband signal with better signal quality, when the signal received power of the FSO RF module 3012 is greater than or equal to the signal received power of the MW RF module 3013, the first control command indicates that the target receiving link selected by the first selection unit 30114 is the FSO receiving link 30115; or when the signal received power of the FSO RF module 3012 is less than the signal received power of the MW RF module 3013, the first control command indicates that the target receiving link selected by the first selection unit 30114 is the MW receiving link 30116.

It should be further noted that, the control module 30117 is functionally divided, and the control module 30117 may be coupled to the first selection unit 30114, or coupled to the FSO RF module 3012 or the MW RF module 3013. Certainly, a part of functions of the control module 30117 are coupled to the foregoing modules. This is not limited in this application. For example, the FSO RF module 3012 may perform detection on the signal received power of the FSO RF module 3012, and send the signal received power to the control module 30117; or the MW RF module 3013 may perform detection on the signal received power of the MW RF module 3013, and send the signal received power to the control module 30117.

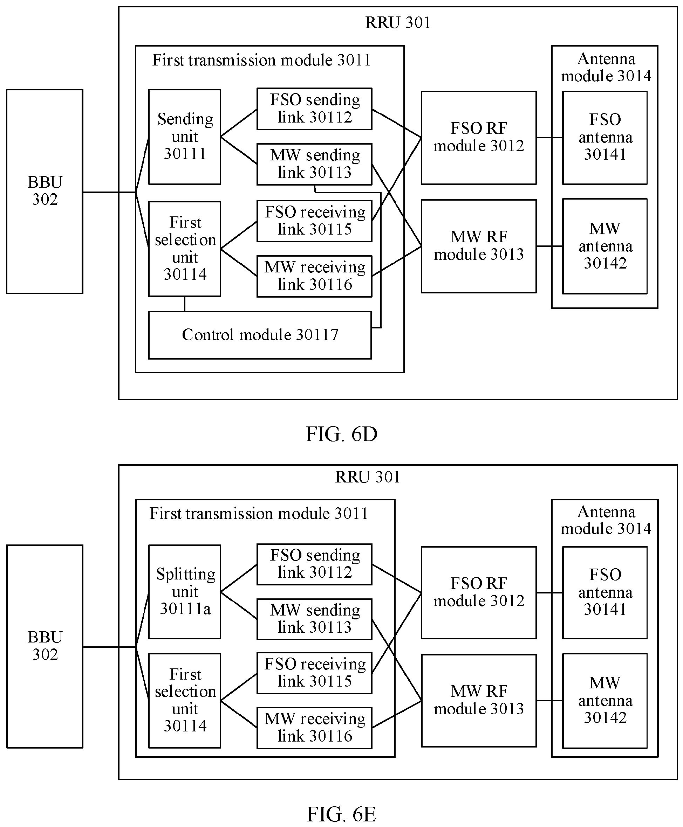

Manner 2: Refer to FIG. 6D. The control module 30117 is connected to the MW sending link 30113. The control module 30117 may determine, based on a control signal of the BBU 302, to select a baseband signal from a specific receiving link. Because the BBU 302 is connected to the first transmission module 3011 through the cable, in this embodiment of this application, the BBU 302 may transmit the control signal through a link for transmission of the baseband signal.

Based on this, in Manner 2, the BBU 302 is further configured to modulate the first baseband signal and the control signal before transmitting the first baseband signal to the first transmission module 3011 in the RRU 301 through the cable, where the control signal indicates to select the FSO technology or the MW technology for communication.

The MW sending link 30113 is further configured to: before transmitting the first baseband signal to the MW RF module 3012, demodulate the first baseband signal to obtain the control signal; and transmit the control signal to the control module 30117.

The control module 30117 is further configured to generate the first control command based on the control signal.

Optionally, the BBU 302 may generate the control signal based on data quality (for example, a packet loss rate, a bit error rate, or a signal-to-noise ratio) of previously received data. This is not limited in this application.

In a possible design, based on the structure of the first transmission module 3011 shown in FIG. 6A, the sending unit 30111 in the first transmission module 3011 may include a splitting unit 30111a. As shown in FIG. 6E, the splitting unit 30111a is configured to: split the received first baseband signal, transmit one channel of the first baseband signal to the FSO sending link 30112, and transmit the other channel of the first baseband signal to the MW sending link 30113.

According to this design, the first transmission module 3011 may transmit the received first baseband signal to both the FSO sending link 30112 and the MW sending link 30113.

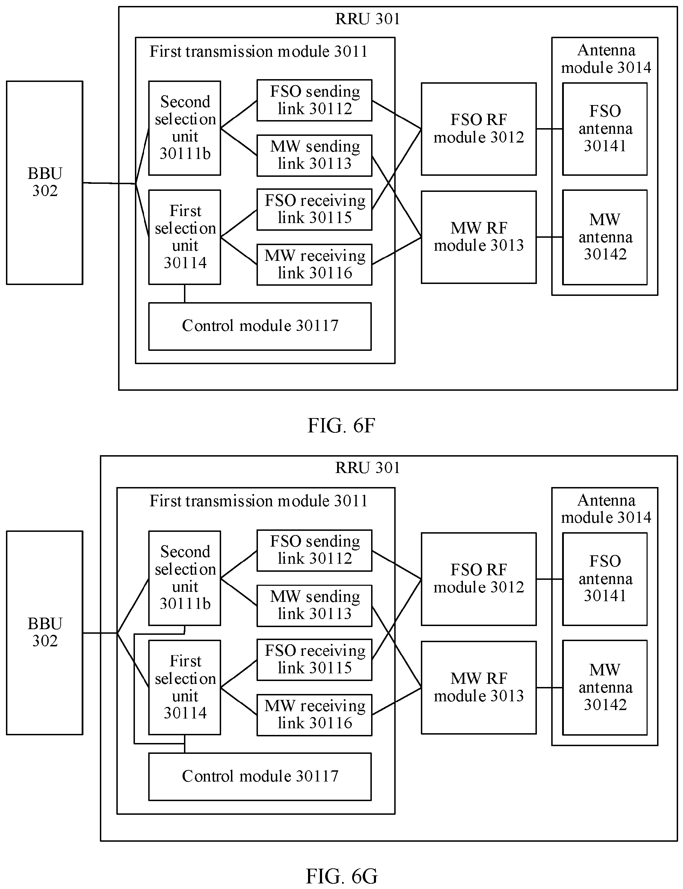

In another possible design, based on the structure of the first transmission module 3011 shown in FIG. 6B, the sending unit 30111 in the first transmission module 3011 may include a second selection unit 30111b. As shown in FIG. 6F, the second selection unit 30111b is configured to: select a target sending link from the FSO sending link 30112 and the MW sending link 30113, and transmit the received first baseband signal to the target sending link, where the target sending link is the FSO sending link 30112 or the MW sending link 30113.

According to this design, the first transmission module 3011 may send the received first baseband signal to one of the FSO sending link 30112 and the MW sending link 30113.

Optionally, in this design, refer to FIG. 6G. The control module 30117 is connected to the second selection unit 30111b. The control module 30117 is further configured to send a second control command to the second selection unit 30111b, where the second control command instructs the second selection unit 30111b to select the target sending link.

It should be noted that, in this embodiment of this application, the control module 30117 should select a same technology to receive and send a signal. To be specific, when the first control command indicates that the target receiving link selected by the first selection unit is the FSO receiving link, the second control command indicates that the target sending link selected by the second selection unit is the FSO sending link; or when the first control command indicates that the target receiving link selected by the first selection unit is the MW receiving link, the second control command indicates that the target sending link selected by the second selection unit is the MW sending link.

Optionally, in this design, the control module 30117 may generate the first control command and the second control command in a same manner. For a specific generation process, refer to the foregoing descriptions of Manner 1 shown in FIG. 6C, or refer to the foregoing descriptions of Manner 2 shown in FIG. 6D. Details are not described again this time.

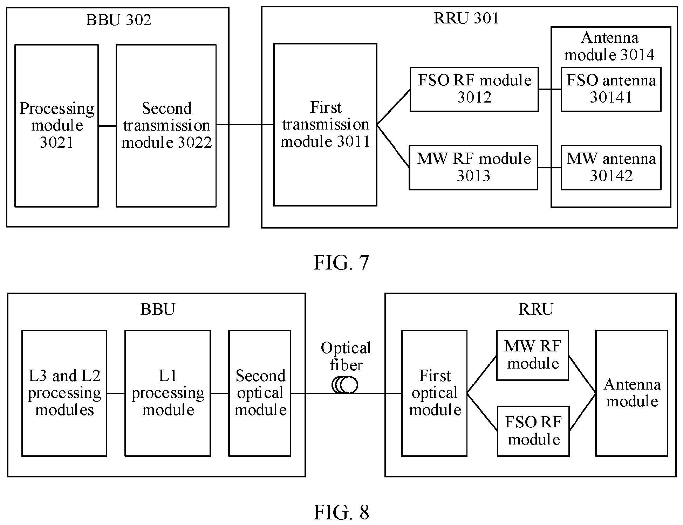

In an implementation, refer to FIG. 7. The BBU 302 may include: a processing module 3021 and a second transmission module 3022. The second transmission module 3022 is connected to the first transmission module 3011 through one cable. The processing module 3021 may be responsible for processing of all protocol layers of the first network device, including data processing of control planes and user planes of an L3 layer, an L2 layer, and an L1 layer.

In the data sending process, the processing module 3021 is configured to: perform baseband processing on the to-be-transmitted first data to generate the first baseband signal, and send the generated first baseband signal to the second transmission module 3022. The second transmission module 3022 is configured to: modulate the first baseband signal, and transmit the first baseband signal to the first transmission module 3011 through the cable. The to-be-transmitted first data may be generated by the processing module 3021 or received from another network device. This is not limited in this application.

Optionally, based on logical function division, the processing module 3021 may include L3 and L2 processing modules and an L1 processing module. For function descriptions of the L3 and L2 processing modules and the L1 processing module, refer to the foregoing descriptions of the structure of the network device shown in FIG. 2B. Details are not described herein again.

In the data receiving process, the second transmission module 3022 is configured to: demodulate the target baseband signal received from the first transmission module 3011, and transmit a demodulated target baseband signal to the processing module 3021. The processing module 3021 is configured to perform baseband processing on the target baseband signal to obtain the second data. The processing module 3021 may further perform subsequent processing based on the second data.

In conclusion, an embodiment of this application provides a transmission system of a network device. In the transmission system, an RRU may implement joint deployment of an MW technology and an FSO technology. In this way, one BBU and one RRU that integrates the MW technology and the FSO technology may be deployed in one network device. Based on this, the BBU and the RRU in the network device may be connected through one cable. This solution can reduce installation difficulty of the network device.

In a process of installing the network device, a worker only needs to align an RRU at a transmit end with an RRU at a receive end once. Therefore, this solution can reduce the installation difficulty.

In addition, compared with a conventional network device (the network device shown in FIG. 2B), in the network device provided in this solution, the BBU and the RRU are connected only through one cable. This solution can also reduce costs of the network device.

Based on the transmission system of the network device shown in FIG. 3 to FIG. 7, an embodiment of this application further provides an example of an architecture of a transmission system of a network device. Refer to FIG. 8. The network device includes a BBU and an RRU. The RRU includes: a first optical module, an MW RF module, an FSO RF module, and an antenna module. The BBU includes L3 and L2 processing modules, an L1 processing module, and a second optical module. The first optical module in the RRU is connected to the second optical module in the BBU through one optical fiber. Optionally, the first optical module and the second optical module may be digital over fiber (digital over fiber, DOF) modules.

The L3 and L2 processing modules in the BBU are configured to implement functions of the network device at an L3 and an L2. The L1 processing module is configured to implement functions of the network device at an L1.

The second optical module in the BBU and the second optical module in the RRU are configured to perform optical processing on a baseband signal. Transmission of the baseband signal between the second optical module and the first optical module may be performed through a CPRI. For specific functions of the first optical module and the second optical module, refer to descriptions of the first transmission module 3011 and the second transmission module 3022 in the foregoing embodiments. Details are not described herein again.

The FSO RF module and the MW RF module that are in the RRU are respectively configured to perform radio frequency processing by using corresponding technologies. The FSO RF module and the MW RF module share the same L1 processing module in the BBU. For specific functions of the FSO RF module and the MW RF module, refer to descriptions of the FSO RF module 3012 and the MW RF module 3013 in the foregoing embodiments. Details are not described herein again.

The antenna module in the RRU is configured to receive and send a radio frequency signal. For functions of the antenna module, refer to descriptions of the antenna module 3014 in the foregoing embodiments. Details are not described herein again.

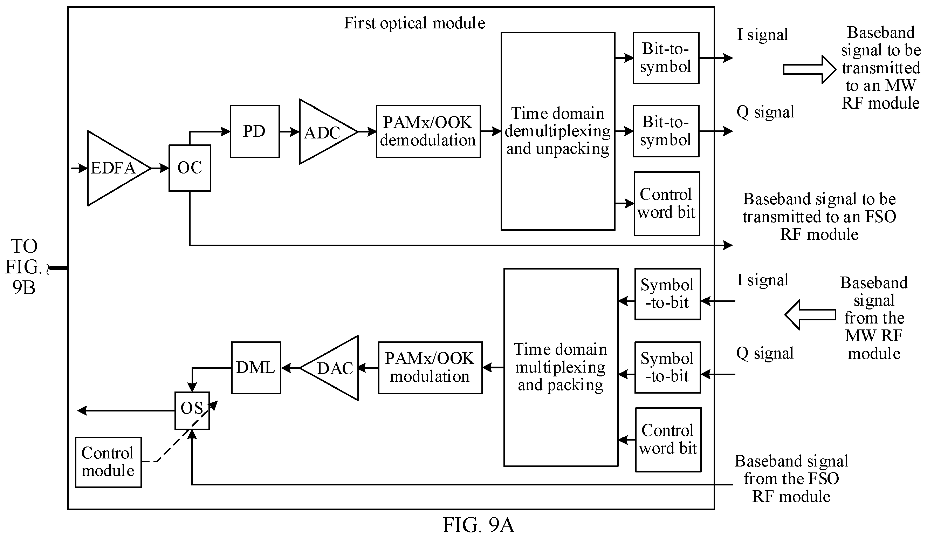

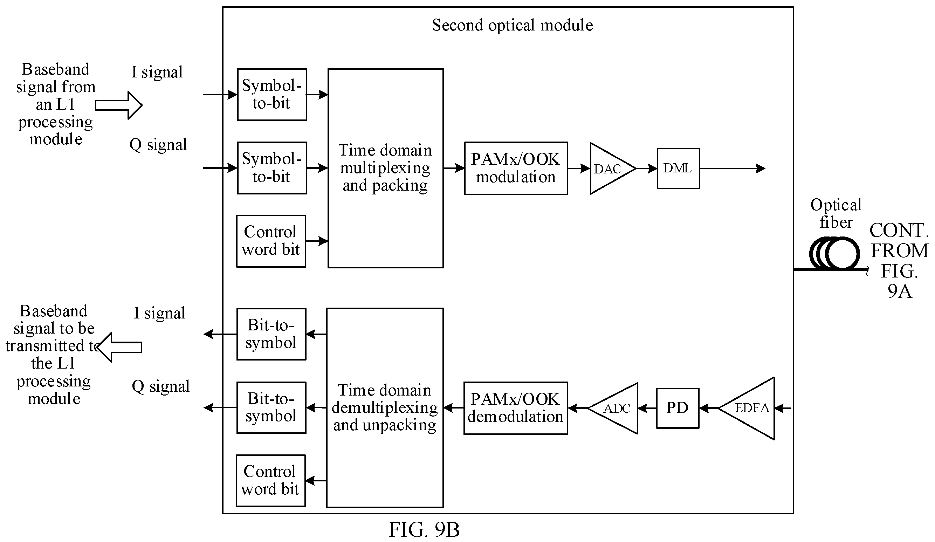

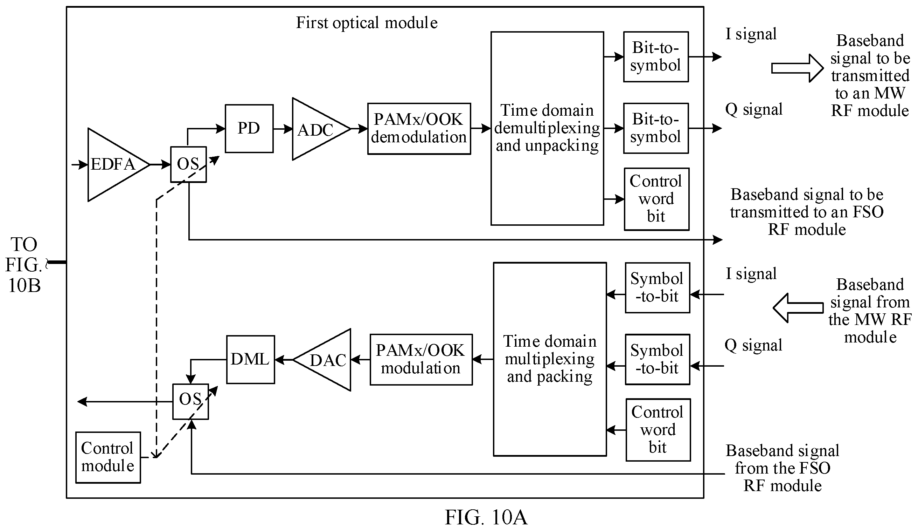

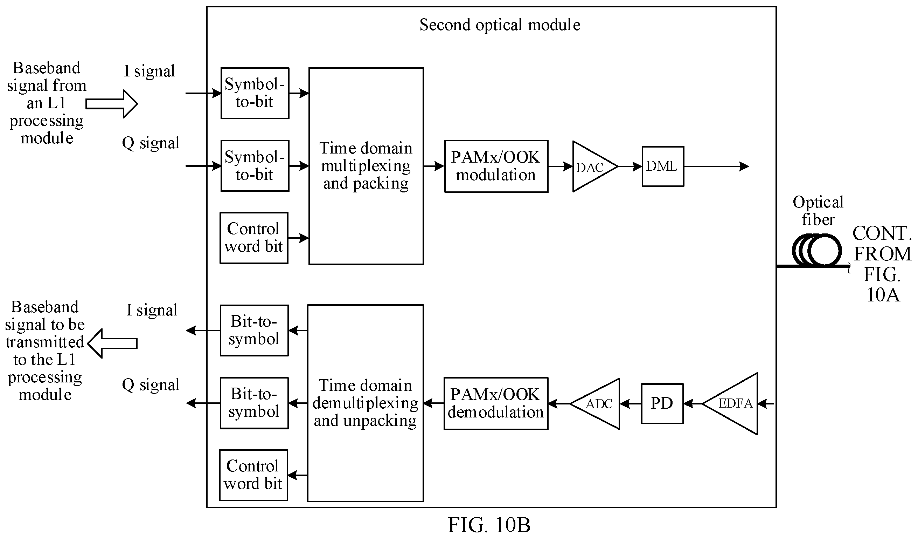

The following describes circuit structures of the second optical module and the first optical module with reference to diagrams of circuits shown in FIG. 9A and FIG. 9B and FIG. 10A and FIG. 10B.

Example 1 of the circuit structures of the second optical module and the first optical module: Refer to FIG. 9A and FIG. 9B. In a data sending process, the first optical module splits, via an optical coupler (optical coupler, OC), the baseband signal received from the second optical module into two channels of the same signal, and respectively transmit the two channels of the signal to the MW RF module and the FSO RF module. In a data receiving process, the first optical module uses an optical switch (optical switch, OS) to select, for receiving, a specific channel of the baseband signal from the FSO RF module or the MW RF module.

A data sending process of the network device is as follows:
After receiving a baseband signal from the L1 processing module, the second optical module in the BBU performs symbol-to-bit (Symbol-to-Bit) mapping on an I signal and a Q signal in the baseband signal; then performs time domain multiplexing and packing (Time Domain Multiplexing and Packing) on a mapped baseband signal and a mapped control word bit (namely, a control signal); then performs pulse amplitude modulation (pulse amplitude modulation, PAM)x/on-off keying (on-off keying, OOK) modulation; and finally after signal processing by a component like a digital-to-analog converter (digital-to-analog converter, DAC) or a directly modulated laser (directly modulated laser, DML), transmits a finally obtained baseband signal to the first optical module in the RRU through the optical fiber.

After amplifying the received baseband signal via an erbium-doped fiber amplifier (erbium-doped fiber amplifier, EDFA), the first optical module in the RRU splits the baseband signal into two channels via the OC. For one channel, the baseband signal is restored to an initial baseband signal including the I signal and the Q signal through an MW sending link, and transmission of the initial baseband signal to the MW RF module is performed for subsequent processing. For the other channel, the baseband signal is sent to the FSO RF module through an FSO sending link for subsequent processing.

As shown in FIG. 9A and FIG. 9B, a process in which the received baseband signal is restored to the initial baseband signal through the MW sending link (namely, an inverse process in which the second optical module in the BBU processes the baseband signal) is as follows:
A component like a photo diode detector (photo diode detector) or an analog-to-digital converter (analog-to-digital converter, ADC) in the MW sending link processes the baseband signal; then sequentially performs PAMx/OOK demodulation and time domain demultiplexing and unpacking (Time Domain Demultiplexing and Unpacking) on the baseband signal to restore the control word bit and the baseband signal; and finally performs bit-to-symbol (Bit-to-Symbol) mapping on the restored baseband signal to restore the initial baseband signal including the I signal and the Q signal.

A data receiving process of the network device is as follows:
The first optical module in the RRU processes the baseband signal from the MW RF module, and then transmits a processed baseband signal to the OS. For a specific process, refer to a processing process of the second optical module on the baseband signal in the data sending process of the network device. Details are not described herein again. The first optical module also performs transmission, to the OS, of the baseband signal that is from the FSO RF module. The first optical module selects one channel of the baseband signal via the OS, and transmits the baseband signal to the second optical module in the BBU through the optical fiber.

The OS may select the baseband signal from the FSO RF module or the MW RF module according to a control command of a control module. For example, the control module may generate the control command based on signal received power of the FSO RF module and signal received power of the MW RF module; or generate the control command based on the control word bit (control signal) sent by the BBU in the data sending process.

The second optical module in the BBU restores the baseband signal to the initial baseband signal including the I signal and the Q signal. For a specific process, refer to a process of processing the baseband signal in the data sending process of the network device through the MW sending link of the first optical module. Details are not described herein again.

Example 2 of the circuit structures of the second optical module and the first optical module: Refer to FIG. 10A and FIG. 10B. In a data sending process, the first optical module uses an OS to select one of the MW RF module and the FSO RF module to send the baseband signal. In a data receiving process, the first optical module also uses the OS to select, for receiving, a specific channel of the baseband signal from the FSO RF module or the MW RF module.

Data receiving and sending processes of the network device in Example 2 is similar to the data sending process of the network device in Example 1. The only difference is that, in the data sending process of the network device, after amplifying the received baseband signal via the EDFA, the first optical module sends the baseband signal to the MW sending link 30113 or the FSO sending link 30112 via the OS.

The control module 30117 may simultaneously control two OSs to select the MW RF module or the FSO RF module for data receiving and sending.

It should be noted that, FIG. 9A and FIG. 9B and FIG. 10A and FIG. 10B are used as examples, and do not limit specific circuit structures of the RRU and the BBU that are in the network device. In an actual scenario, in the RRU and the BBU, there may be more or fewer components than those shown in the figures, or two or more components may be combined, or an original component may be replaced with another component having similar or same functions. In addition, the components shown in the figures may be implemented in hardware including one or more signal processing and/or application-specific integrated circuits.

Based on descriptions of the foregoing embodiments, this application further provides an RRU. The first network device in the communication system shown in FIG. 2A is still used as an example for description. The first network device includes an RRU 301 provided in this embodiment of this application, and further includes a BBU 302. The RRU 301 includes a first transmission module 3011, an FSO RF module 3012, an MW RF module 3013, and an antenna module 3014. The first transmission module 3011 is connected to the BBU 302 through a cable, the first transmission module 3011 is connected to the FSO RF module 3012 and the MW RF module 3013, and the FSO RF module 3012 and the MW RF module 3013 are separately connected to the antenna module 3014.

The first transmission module 3011 is configured to: receive a first baseband signal from the BBU 302 through the cable, and transmit the received first baseband signal to the FSO RF module 3012 and/or the MW RF module 3013.

The FSO RF module 3012 is configured to: when receiving the first baseband signal, process the first baseband signal to obtain a first FSO signal; and transmit the first FSO signal to the antenna module 3014.

The MW RF module 3013 is configured to: when receiving the first baseband signal, process the first baseband signal to obtain a first MW signal; and transmit the first MW signal to the antenna module 3014.

The antenna module 3014 is configured to: transmit the received first FSO signal, and/or transmit the received first MW signal.

The antenna module 3014 is further configured to: receive a second FSO signal from a second network device, and transmit the second FSO signal to the FSO RF module 3012; and receive a second MW signal from the second network device, and transmit the second MW signal to the MW RF module 3013.

The FSO RF module 3012 is further configured to: process the received second FSO signal to obtain a second baseband signal, and transmit the second baseband signal to the first transmission module 3011.

The MW RF module 3013 is further configured to: process the received second MW signal to obtain a third baseband signal, and transmit the third baseband signal to the first transmission module 3011.

The first transmission module 3011 is further configured to transmit a target baseband signal in the received second baseband signal and the received third baseband signal to the BBU 302 through the cable, where the target baseband signal is the second baseband signal or the third baseband signal.

In an implementation, the first transmission module 3011 includes a sending unit 30111, an FSO sending link 30112, an MW sending link 30113, a first selection unit 30114, an FSO receiving link 30115, and an MW receiving link 30116.

The sending unit 30111 is configured to transmit the received first baseband signal to the FSO sending link 30112 and/or the MW sending link 30113.

The FSO sending link 30112 is configured to transmit the first baseband signal to the FSO RF module 3012 when receiving the first baseband signal.

The MW sending link 30113 is configured to transmit the first baseband signal to the MW RF module 3013 when receiving the first baseband signal.

The FSO receiving link 30115 is configured to: receive the second baseband signal, and transmit the second baseband signal to the first selection unit 30114.

The MW receiving link 30116 is configured to: receive the third baseband signal, and transmit the third baseband signal to the first selection unit 30114.

The first selection unit 30114 is configured to: select a target receiving link from the FSO receiving link 30115 and the MW receiving link 30116; receive the target baseband signal from the target receiving link; and transmit the target baseband signal to the BBU 302 through the cable, where the target receiving link is the FSO receiving link 30115 or the MW receiving link 30116.

Optionally, the first transmission module 3011 further includes: a control module 30117; and the control module 30117 is connected to the first selection unit 30114.

The control module 30117 is configured to send a first control command to the first selection unit 30114, where the first control command instructs the first selection unit 30114 to select the target receiving link.

The first selection unit 30114 is configured to select the target receiving link from the FSO receiving link 30115 and the MW receiving link 30116 according to the first control command.

In a design, the control module 30117 is connected to the FSO RF module 3012 and the MW RF module 3013. The control module 30117 is further configured to: perform detection on signal received power of the FSO RF module 3012; perform detection on signal received power of the MW RF module 3013; and generate the first control command based on the signal received power of the FSO RF module 3012 and the signal received power of the MW RF module 3013.

When the signal received power of the FSO RF module 3012 is greater than or equal to the signal received power of the MW RF module 3013, the first control command indicates that the target receiving link selected by the first selection unit 30114 is the FSO receiving link 30115; or when the signal received power of the FSO RF module 3012 is less than the signal received power of the MW RF module 3013, the first control command indicates that the target receiving link selected by the first selection unit 30114 is the MW receiving link 30116.

In another design, the control module 30117 is connected to the MW sending link 30113. The BBU 302 is further configured to modulate the first baseband signal and a control signal before transmitting the first baseband signal to the first transmission module 3011 in the RRU 301 through the cable, where the control signal indicates to select an FSO technology or an MW technology for communication.

The MW sending link is further configured to: before transmitting the first baseband signal to the MW RF module 3013, demodulate the first baseband signal to obtain the control signal; and transmit the control signal to the control module 30117.

The control module 30117 is further configured to generate the first control command based on the control signal.

In an implementation, the sending unit 30111 includes a splitting unit. The splitting unit 30111a is configured to: split the received first baseband signal, transmit one channel of the first baseband signal to the FSO sending link 30112, and transmit the other channel of the first baseband signal to the MW sending link 30113.

In an implementation, the sending unit 30111 includes a second selection unit. The second selection unit 30111b is configured to: select a target sending link from the FSO sending link 30112 and the MW sending link 30113, and transmit the received first baseband signal to the target sending link, where the target sending link is the FSO sending link 30112 or the MW sending link 30113.

Optionally, the control module 30117 is further configured to send a second control command to the second selection unit 30111b, where the second control command instructs the second selection unit to select the target sending link.

When the first control command indicates that the target receiving link selected by the first selection unit 30114 is the FSO receiving link 30115, the second control command indicates that the target sending link selected by the second selection unit is the FSO sending link 30112; or when the first control command indicates that the target receiving link selected by the first selection unit 30114 is the MW receiving link 30116, the second control command indicates that the target sending link selected by the second selection unit is the MW sending link 30113.

Based on the foregoing embodiments, this application further provides a network device. The network device includes a BBU and an RRU. For structures of the BBU and the RRU, refer to descriptions in the foregoing embodiments. Details are not described herein again.

Based on the foregoing embodiments, this application further provides a chip. The chip may be used in a BBU or an RRU. For a structure of the chip, refer to descriptions of the BBU or the RRU in the foregoing embodiments. Details are not described herein again.

Based on the foregoing embodiments, this application further provides a circuit board. The circuit board may be used in a BBU or an RRU. For a structure of the circuit board, refer to descriptions of the BBU or the RRU in the foregoing embodiments. Details are not described herein again.

Based on the foregoing embodiments, this application further provides a data transmission method. The method is applied to a first network device having the transmission system shown in FIG. 3.

In the method, the first network device may implement a data sending process through the following steps.

The BBU 302 generates a first baseband signal based on first data, and transmits the first baseband signal to the first transmission module 3011 in the RRU 301 through a cable.

The first transmission module 3011 transmits the received first baseband signal to the FSO RF module 3012 and/or the MW RF module 3013.

When receiving the first baseband signal, the FSO RF module 3012 processes the first baseband signal to obtain a first FSO signal; and transmits the first FSO signal to the antenna module 3014.

When receiving the first baseband signal, the MW RF module 3013 processes the first baseband signal to obtain a first MW signal; and transmits the first MW signal to the antenna module 3014.

The antenna module 3014 transmits the received first FSO signal, and/or transmits the received first MW signal.

In the method, the first network device may implement a data sending process through the following steps.

The antenna module 3014 receives a second FSO signal from a second network device, and transmits the second FSO signal to the FSO RF module 3012; and receives a second MW signal from the second network device, and transmits the second MW signal to the MW RF module 3013.

The FSO RF module 3012 processes the received second FSO signal to obtain a second baseband signal, and transmits the second baseband signal to the first transmission module 3011.

The MW RF module 3013 processes the received second MW signal to obtain a third baseband signal, and transmits the third baseband signal to the first transmission module 3011.

The first transmission module 3011 transmits a target baseband signal in the received second baseband signal and the received third baseband signal to the BBU 302 through the cable, where the target baseband signal is the second baseband signal or the third baseband signal.

The BBU 302 processes the received target baseband signal to obtain second data.

For specific steps performed by modules and specific structures of the modules, refer to related descriptions in the foregoing embodiments. Details are not described again this time.

In conclusion, this application provides a transmission system, an RRU, and a network device, to simplify installation of the network device supporting an MW technology and an FSO technology. In this solution, the RRU may implement joint deployment of the MW technology and the FSO technology. In this way, one BBU and one RRU that integrates the MW technology and the FSO technology may be deployed in one network device. Based on this, the BBU and the RRU in the network device may be connected through one cable. This solution can reduce installation difficulty of the network device.

A person skilled in the art should understand that, embodiments of this application may be provided as a method, a system, or a computer program product. Therefore, in this application, a form of hardware only embodiments, software only embodiments, or embodiments with a combination of software and hardware may be used. In addition, in this application, a form of a computer program product that is implemented on one or more computer-usable storage media (including but not limited to a disk memory, a CD-ROM, an optical memory, and the like) including computer-usable program code may be used.

This application is described with reference to flowcharts and/or block diagrams of the method, the device (system), and the computer program product according to this application. It should be understood that, computer program instructions may be used for implementing each procedure and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of another programmable data processing device to generate a machine, so that instructions executed by the computer or the processor of the another programmable data processing device generate an apparatus configured to implement a function specified in one or more procedures in the flowcharts and/or in one or more blocks in the block diagrams.

The computer program instructions may alternatively be stored in a computer-readable memory that can direct a computer or another programmable data processing device to work in a specific manner, so that the instructions stored in the computer-readable memory generate an artifact including an instruction apparatus. The instruction apparatus implements a function specified in one or more procedures in the flowcharts and/or in one or more blocks in the block diagrams.

The computer program instructions may alternatively be loaded onto a computer or another programmable data processing device, so that a series of operation steps are performed on the computer or the another programmable device to generate computer-implemented processing, so that instructions executed on the computer or the another programmable device provide steps for implementing a function specified in one or more procedures in the flowcharts and/or in one or more blocks in the block diagrams.

It is clear that, a person skilled in the art may make various modifications and variations to this application without departing from the spirit and scope of this application. This application is intended to cover these modifications and variations of this application provided that they fall within the scope of protection defined by the claims and their equivalent technologies.

## Claims

1. A transmission system, used in a first network device, comprising: a baseband unit BBU and a remote radio unit RRU, wherein the RRU comprises a first transmission module, a free space communication FSO radio frequency RF module, a microwave MW RF module, and an antenna module, the BBU is connected to the first transmission module in the RRU through a cable, the first transmission module is connected to the FSO RF module and the MW RF module, and the FSO RF module and the MW RF module are separately connected to the antenna module;
the BBU is configured to: generate a first baseband signal based on first data, and transmit the first baseband signal to the first transmission module in the RRU through the cable;
the first transmission module is configured to transmit the received first baseband signal to the FSO RF module and/or the MW RF module;
the FSO RF module is configured to: when receiving the first baseband signal, process the first baseband signal to obtain a first FSO signal; and transmit the first FSO signal to the antenna module;
the MW RF module is configured to: when receiving the first baseband signal, process the first baseband signal to obtain a first MW signal; and transmit the first MW signal to the antenna module; and
the antenna module is configured to: transmit the received first FSO signal, and/or transmit the received first MW signal.

2. The system according to claim 1, wherein
the antenna module is further configured to: receive a second FSO signal from a second network device, and transmit the second FSO signal to the FSO RF module; and receive a second MW signal from the second network device, and transmit the second MW signal to the MW RF module;
the FSO RF module is further configured to: process the received second FSO signal to obtain a second baseband signal, and transmit the second baseband signal to the first transmission module;
the MW RF module is further configured to: process the received second MW signal to obtain the third baseband signal, and transmit the third baseband signal to the first transmission module;
the first transmission module is further configured to transmit a target baseband signal in the received second baseband signal and the received third baseband signal to the BBU through the cable, wherein the target baseband signal is the second baseband signal or the third baseband signal; and
the BBU is further configured to process the received target baseband signal to obtain second data.

3. The system according to claim 2, wherein the first transmission module comprises a sending unit, an FSO sending link, an MW sending link, a first selection unit, an FSO receiving link, and an MW receiving link;
the sending unit is configured to transmit the received first baseband signal to the FSO sending link and/or the MW sending link;
the FSO sending link is configured to transmit the first baseband signal to the FSO RF module when receiving the first baseband signal;
the MW sending link is configured to transmit the first baseband signal to the MW RF module when receiving the first baseband signal;
the FSO receiving link is configured to: receive the second baseband signal, and transmit the second baseband signal to the first selection unit;
the MW receiving link is configured to: receive the third baseband signal, and transmit the third baseband signal to the first selection unit; and
the first selection unit is configured to: select a target receiving link from the FSO receiving link and the MW receiving link; receive the target baseband signal from the target receiving link; and transmit the target baseband signal to the BBU through the cable, wherein the target receiving link is the FSO receiving link or the MW receiving link.

4. The system according to claim 3, wherein the first transmission module further comprises a control module; and the control module is connected to the first selection unit;
the control module is configured to send a first control command to the first selection unit, wherein the first control command instructs the first selection unit to select the target receiving link; and
the first selection unit is configured to select the target receiving link from the FSO receiving link and the MW receiving link according to the first control command.

5. The system according to claim 4, wherein the control module is connected to the FSO RF module and the MW RF module; and
the control module is further configured to: perform detection on signal received power of the FSO RF module; perform detection on signal received power of the MW RF module; and generate the first control command based on the signal received power of the FSO RF module and the signal received power of the MW RF module.

6. The system according to claim 5, wherein
when the signal received power of the FSO RF module is greater than or equal to the signal received power of the MW RF module, the first control command indicates that the target receiving link selected by the first selection unit is the FSO receiving link; or
when the signal received power of the FSO RF module is less than the signal received power of the MW RF module, the first control command indicates that the target receiving link selected by the first selection unit is the MW receiving link.

7. The system according to claim 4, wherein the control module is connected to the MW sending link;
the BBU is further configured to modulate the first baseband signal and a control signal before transmitting the first baseband signal to the first transmission module in the RRU through the cable, wherein the control signal indicates to select an FSO technology or an MW technology for communication;
the MW sending link is further configured to: before transmitting the first baseband signal to the MW RF module, demodulate the first baseband signal to obtain the control signal; and transmit the control signal to the control module; and
the control module is further configured to generate the first control command based on the control signal.

8. The system according to any one of claims 3 to 6, wherein the sending unit comprises a splitting unit; and
the splitting unit is configured to: split the received first baseband signal, transmit one channel of the first baseband signal to the FSO sending link, and transmit the other channel of the first baseband signal to the MW sending link.

9. The system according to any one of claims 4 to 6, wherein the sending unit comprises a second selection unit; and
the second selection unit is configured to: select a target sending link from the FSO sending link and the MW sending link, and transmit the received first baseband signal to the target sending link, wherein the target sending link is the FSO sending link or the MW sending link.

10. The system according to claim 9, wherein the control module is further configured to send a second control command to the second selection unit, wherein the second control command instructs the second selection unit to select the target sending link; and
when the first control command indicates that the target receiving link selected by the first selection unit is the FSO receiving link, the second control command indicates that the target sending link selected by the second selection unit is the FSO sending link; or when the first control command indicates that the target receiving link selected by the first selection unit is the MW receiving link, the second control command indicates that the target sending link selected by the second selection unit is the MW sending link.

11. A remote radio unit RRU, used in a first network device, wherein the first network device further comprises a baseband unit BBU, the RRU comprises a first transmission module, a free space communication FSO radio frequency RF module, a microwave MW RF module, and an antenna module, the first transmission module is connected to the BBU through a cable, the first transmission module is connected to the FSO RF module and the MW RF module, and the FSO RF module and the MW RF module are separately connected to the antenna module;
the first transmission module is configured to: receive a first baseband signal from the BBU through the cable, and transmit the received first baseband signal to the FSO RF module and/or the MW RF module;
the FSO RF module is configured to: when receiving the first baseband signal, process the first baseband signal to obtain a first FSO signal; and transmit the first FSO signal to the antenna module;
the MW RF module is configured to: when receiving the first baseband signal, process the first baseband signal to obtain a first MW signal; and transmit the first MW signal to the antenna module; and
the antenna module is configured to: transmit the received first FSO signal, and/or transmit the received first MW signal.

12. The RRU according to claim 11, wherein
the antenna module is further configured to: receive a second FSO signal from a second network device, and transmit the second FSO signal to the FSO RF module; and receive a second MW signal from the second network device, and transmit the second MW signal to the MW RF module;
the FSO RF module is further configured to: process the received second FSO signal to obtain a second baseband signal, and transmit the second baseband signal to the first transmission module;
the MW RF module is further configured to: process the received second MW signal to obtain the third baseband signal, and transmit the third baseband signal to the first transmission module; and
the first transmission module is further configured to transmit a target baseband signal in the received second baseband signal and the received third baseband signal to the BBU through the cable, wherein the target baseband signal is the second baseband signal or the third baseband signal.

13. The RRU according to claim 12, wherein the first transmission module comprises a sending unit, an FSO sending link, an MW sending link, a first selection unit, an FSO receiving link, and an MW receiving link;
the sending unit is configured to transmit the received first baseband signal to the FSO sending link and/or the MW sending link;
the FSO sending link is configured to transmit the first baseband signal to the FSO RF module when receiving the first baseband signal;
the MW sending link is configured to transmit the first baseband signal to the MW RF module when receiving the first baseband signal;
the FSO receiving link is configured to: receive the second baseband signal, and transmit the second baseband signal to the first selection unit;
the MW receiving link is configured to: receive the third baseband signal, and transmit the third baseband signal to the first selection unit; and
the first selection unit is configured to: select a target receiving link from the FSO receiving link and the MW receiving link; receive the target baseband signal from the target receiving link; and transmit the target baseband signal to the BBU through the cable, wherein the target receiving link is the FSO receiving link or the MW receiving link.

14. The RRU according to claim 13, wherein the first transmission module further comprises a control module; and the control module is connected to the first selection unit;
the control module is configured to send a first control command to the first selection unit, wherein the first control command instructs the first selection unit to select the target receiving link; and
the first selection unit is configured to select the target receiving link from the FSO receiving link and the MW receiving link according to the first control command.

15. The RRU according to claim 14, wherein the control module is connected to the FSO RF module and the MW RF module; and
the control module is further configured to: perform detection on signal received power of the FSO RF module; perform detection on signal received power of the MW RF module; and generate the first control command based on the signal received power of the FSO RF module and the signal received power of the MW RF module.

16. The RRU according to claim 15, wherein
when the signal received power of the FSO RF module is greater than or equal to the signal received power of the MW RF module, the first control command indicates that the target receiving link selected by the first selection unit is the FSO receiving link; or
when the signal received power of the FSO RF module is less than the signal received power of the MW RF module, the first control command indicates that the target receiving link selected by the first selection unit is the MW receiving link.

17. The RRU according to claim 14, wherein the control module is connected to the MW sending link;
the BBU is further configured to modulate the first baseband signal and a control signal before transmitting the first baseband signal to the first transmission module in the RRU through the cable, wherein the control signal indicates to select an FSO technology or an MW technology for communication;
the MW sending link is further configured to: before transmitting the first baseband signal to the MW RF module, demodulate the first baseband signal to obtain the control signal; and transmit the control signal to the control module; and
the control module is further configured to generate the first control command based on the control signal.

18. The RRU according to any one of claims 13 to 16, wherein the sending unit comprises a splitting unit; and
the splitting unit is configured to: split the received first baseband signal, transmit one channel of the first baseband signal to the FSO sending link, and transmit the other channel of the first baseband signal to the MW sending link.

19. The RRU according to any one of claims 14 to 16, wherein the sending unit comprises a second selection unit; and
the second selection unit is configured to: select a target sending link from the FSO sending link and the MW sending link, and transmit the received first baseband signal to the target sending link, wherein the target sending link is the FSO sending link or the MW sending link.

20. The RRU according to claim 19, wherein the control module is further configured to send a second control command to the second selection unit, wherein the second control command instructs the second selection unit to select the target sending link; and
when the first control command indicates that the target receiving link selected by the first selection unit is the FSO receiving link, the second control command indicates that the target sending link selected by the second selection unit is the FSO sending link; or when the first control command indicates that the target receiving link selected by the first selection unit is the MW receiving link, the second control command indicates that the target sending link selected by the second selection unit is the MW sending link.

21. A network device, comprising:
a baseband unit BBU and the remote radio unit RRU according to any one of claims 11 to 20.
